# EUROPÄISCHE PATENTSCHRIFT

(11) **EP 0 780 999 B1**
(45) Veröffentlichungstag und Bekanntmachung des Hinweises auf die Patenterteilung: **12.10.2005**
(21) Anmeldenummer: 96116655.0
(22) Anmeldetag: 17.10.1996
(51) Int. Cl.: H04B 7/26

(54) **Verfahren zur Synchronisation des Zeichenaustausches zwischen einer Nebenstellenanlage und einer Feststation**
Method of synchronising the exchange of signals between a fixed station and a peripheral station
Procédé de synchronisation de l'échange de signaux entre une station fixe et une station périphérique

(30) Priorität: 22.12.1995 DE 19548153
(43) Veröffentlichungstag der Anmeldung: 25.06.1997
(73) Patentinhaber: DeTeWe Systems GmbH, 10997 Berlin (DE)
(72) Erfinder: Pedersen, Erik, 9210 Aalborg SO (DK); Dittmann, Bernd, 12051 Berlin (DE); Wesenberg, Thomas, 25335 Elmshorn (DE)
(74) Vertreter: Fischer, Uwe

(56) Entgegenhaltungen:
- EP-A- 0 626 796
- DE-A- 4 207 986
- DE-A- 4 333 000
- DE-A- 4 407 794
- DE-A- 4 407 795

## Beschreibung

Die Erfindung betrifft ein Verfahren zur Synchronisation der Luftschnittstellen von zu einem Funknetz gehörenden Basisstationen nach dem DECT-Standard, bei dem die Basisstationen an eine DECT-Controller-Unit fest angeschlossen sind.

Die Basisstationen eines derartigen Funknetzes werden nach DECT-Standard Fixed Parts genannt. Eine Synchronisation der Fixed Parts untereinander ist erforderlich, um in einem Funknetz z.B. nach DECT-Standard, die unterbrechungsfreie Gesprächsübergabe (seamless handover) von Mobilteilen, die nach DECT-Standard Portable Parts genannt werden, zu ermöglichen.

Für schnurlose Systeme, z.B. Telefonsysteme sind die Übertragungsverfahren und die Frequenzbänder in analogen und digitalen Telefonnetzen standardisiert. Auf diesem für lokal begrenzte Mobilfunk-Kommunikation genutzten Standard, dem Digital European Cordless Telecommunication (DECT), basieren verschiedene DECT-Systeme. Gemeinsames Merkmal von solchen DECT-Systemen, z.B. DECT-PABX o.a., ist eine Instanz, z.B. DECT-Controller-Unit genannt, an die die Fixed Parts angeschlossen werden, um Mobilität für die Nutzer zu bieten (roaming, handover).

Je nach Ort und Anschlußlage der Fixed Parts treten zueinander Laufzeitunterschiede auf, die zum einen durch die unterschiedliche Kabellänge und zum anderen durch Zeitschlitzversätze in der Dect-Controller-Unit (Raum/Zeitmultiplex) bzw. in den Schaltkreisen durch Phasenunterschiede entstehen. Weiterhin ist es notwendig, daß alle Fixed Parts eines synchronen DECT-Funknetzes die gleiche Multiframe-Number auf ihrer Luftschnittstelle in Form eines sogenannten Broadcasts aussenden, damit die Portable Parts die Synchronität bei einem handover erkennen können.

Aus der DE 42 07 986 A1 ist ein Verfahren zur Synchronisierung von Basisstationen in einem Funktelefonsystem bekannt. Die Synchronisierung wird hier durch Modulation der Speisespannung der Basisstationen in einer Vermittlungsanlage, Übertragung über ein Kabel zwischen Vermittlungsanlage und Basisstation und anschließender Demodulation der Speisespannung in der Basisstation erreicht.

Aus der DE 44 07 795 A1 ist ein Verfahren und eine Schaltungsanordnung zur Koordination des Zugriffs mehrerer Nachrichtenquellen auf einen Bus bekannt. Die Synchronisation des Zugriffs wird hier über eine die Nachrichtenquellen verbindende Steuerleitung (TSDIS) und eine zentrale Steuereinrichtung erreicht und kann auch zur Synchronisation von DECT Geräten verwendet werden.

Aus der DE 44 07 794 A1 ist ein Verfahren zur Synchronisation von Impulsrahmen bekannt, die mittels eines Rahmensynchronisierimpulses synchronisiert werden. Die Synchronisierung erfolgt durch Ausblendung von Multirahmensynchronisierimpulsen, die eine bestimmte Anzahl von Rahmen zu Multirahmen zusammenfassen.

Ausgehend von diesem Stand der Technik lag der Erfindung die Aufgabe zugrunde, für ein derartiges System die Laufzeitunterschiede zwischen den Fixed Parts zu kompensieren und zusätzlich zeitgleich für eine gleiche Multiframe-Number bei allen im System befindlichen Fixed Parts zu sorgen, um ein sogenanntes seamless handover, das eine freie Bewegung - ohne Beeinträchtigungen - während eines Gespräches innerhalb eines Funknetzes gestattet, zu ermöglichen. Diese Aufgabe ist durch die Erfindung gelöst, wie sie im ersten Patentanspruch dargelegt ist. Weitere vorteilhafte Maßnahmen sind Gegenstand der Unteransprüche.

Demgemäß werden bei dem Verfahren zur Synchronisation der Luftschnittstellen von zu einem Funknetz gehörenden Basisstationen nach dem DECT-Standard, bei dem die Basisstationen an eine DECT-Controller-Unit fest angeschlossen sind, eine der Basisstationen als Hauptstation und die weiteren Basisstationen als von ihr abhängige Unterstationen oder ein digitaler Signalprozessor als Hauptstation und sämtliche Basisstationen als Unterstationen genutzt. Ein Signalisierungskanal der als Hauptstation genutzten Basisstation oder des digitalen Signalprozessors ist ausschließlich als Synchronisationskanal für die Synchronisation zwischen der DECT-Controller-Unit und den Basisstationen sowie unter den Basisstationen selbst vorgesehen und eine von der Hauptstation oder dem digitalen Signalprozessor über den Synchronisierungskanal gesendete Rahmensynchronisationsinformation dient zur Synchronisierung der Basisstationen.

In einer Weiterbildung der Erfindung wird zunächst für jeden Fixed Part die Laufzeit der Anschlußleitung ermittelt, dazu werden die restlichen Verzögerungszeiten der Dect-Controller-Unit und der Schaltkreise addiert und als reale Systemverzögerung an den Fixed Part übertragen. Der Fixed Part kann nun anhand einer bekannten maximalen Systemverzögerung zu der ermittelten realen Systemverzögerung einen Wert addieren, der die Differenz zwischen der maximalen Systemverzögerung und der ermittelten realen Systemverzögerung ist. Damit erhält man für alle Fixed Parts stets die maximale Systemverzögerung, unabhängig von der realen Systemverzögerung. Somit sind bei allen Fixed Parts die Laufzeitunterschiede kompensiert. Die absolute Zeitlage, die durch die Multiframe-Number bestimmt wird, muß jedoch noch für alle Fixed Parts erreicht werden.

Die Erfindung wird nachfolgend anhand einer aus drei Figuren bestehenden Zeichnung näher erläutert. In der Zeichnung zeigen die
Fig. 1 das Blockschaltbild von Teilen eines DECT-Systems, die
Fig. 2 das Prinzip eines in DECT- Systemen verwendeten Pulsrahmens und die
Fig. 3 das erfindungsgemäße Synchronisierungsprinzip.

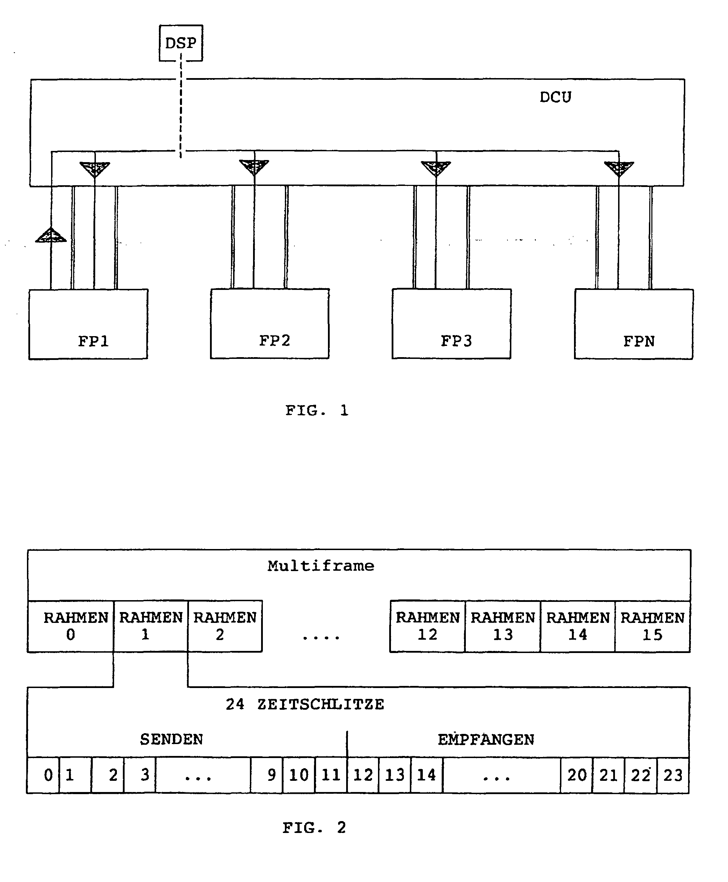

Das System nach dem DECT-Standard besteht gemäß Fig. 1 aus einer DECT-Controller-Unit DCU mit mehreren, z.B. N=1000, fest angeschlossenen Basisstationen FP1...FPN. Die Basisstationen FP1...FPN sind über z.B. jeweils zwei digitale Leitungen, die in Fig. 1 als Doppelstrich gezeichnet sind, mit der DECT-Controller-Unit DCU verbunden. Jede der digitalen Leitungen weist z.B. zwei Basiskanäle und einen Hilfs- oder Signalisierungskanal auf.

Erfindungsgemäß dient entweder eine der Basisstationen FP1...FPN als Haupt-(Master-)Station, die anderen sind Unter-(Slave-)Stationen oder eine zentrale Ressource, z.B. ein Digitaler Signalprozessor DSP erzeugt die Synchronisationsinformation und alle Basisstationen FP im System sind Unter-(Slave-)-Stationen. Im gezeigten Beispiel der Fig. 1 sind die Basisstation FP1 oder DSP die Hauptstationen und die Basisstationen FP2...FPN bzw. FP1...FPN die Unterstationen.

Weiterhin wird einer der Signalisierungskanäle der als Hauptstation dienenden Basisstation FP1, in der Fig. 1 mit Pfeilen versehen, für die Synchronisation aller Basisstationen FP1...FPN untereinander verwendet. Dieser Kanal wird im weiteren Text als "Synchronisationskanal" bezeichnet. Die anderen Signalisierungskanäle der als Hauptstation dienenden Basisstation FP1 sowie der als Unterstationen dienenden Basisstationen FP2...FPN werden für den normalen Signalisierungsverkehr genutzt. Alternativ wird die Synchronisationsinformation vom Digitalen Signalprozessor DSP in die Synchronisationskanäle der FP1...FPN eingespeist.

Die als Hauptstation dienende Basisstation FP1 oder der Digitale Signalprozessor DSP erzeugen die System-Multiframe-Number und senden sie, immer wenn sie inkrementiert wurde, zum Zweck der Synchronisierung an den Synchronisationskanal. Die System-Multiframe-Number ist für die Zugangskontrolle (Medium Access Control) der Portable Parts zu den Fixed Parts beim handover erforderlich.

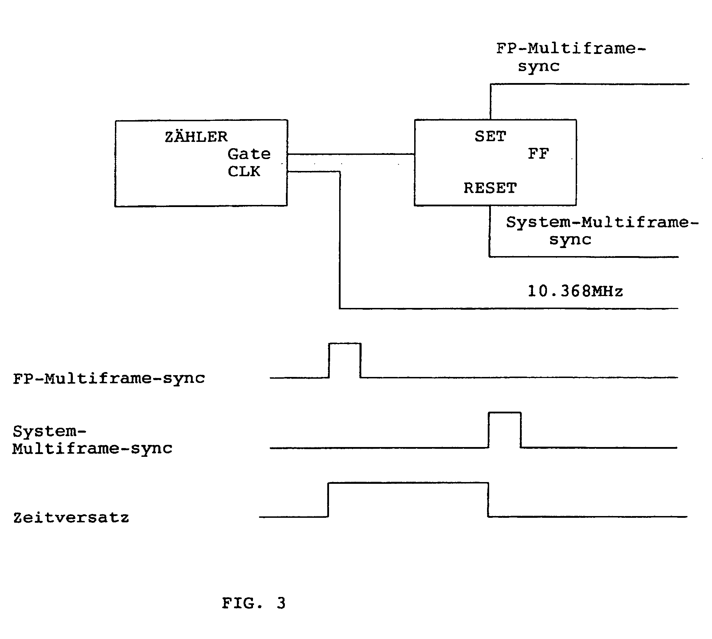

Die DECT-Controller-Unit DCU schaltet diesen Synchronisationskanal der als Hauptstation dienenden Basisstation FP1 oder des Digitalen Signalprozessors DSP an sämtliche Signalisierungskanäle der als Unterstationen dienenden Basisstationen FP2...FPN und an die der Hauptstation FP1. Jede Station FP1..FPN empfängt den System-Multiframe und erzeugt einen internen synchronisierten Multiframe "FP-Multiframe-sync", wie in Fig. 3 angedeutet.

Ein Multiframe gemäß Fig. 2 besteht aus 16 Rahmen. Jeder der 16 Rahmen weist z.B. 24 Zeitschlitze auf, von denen z.B. jeweils 12 für das normale Senden und 12 für das normale Empfangen der Stationen FP1...FPN genutzt werden können. Die Multiframe-Number wird nach jeweils 160 ms inkrementiert. Jeder Rahmen ist 10 ms lang, ein Multiframe umfaßt somit 16 x 10 ms = 160 ms. Da die DECT-Controller-Unit DCU der Taktmaster des Systems ist und in ISDN-basierten Systemen mit 8 kHz-Rahmen entsprechend 125 µs gearbeitet wird, hat man sobald die Multiframes der Stationen FP1...FPN synchronisiert sind, auch die Synchronisation der Fixed Parts auf den Takt der DECT-Controller-Unit DCU erreicht, da sich der Multiframe aus 1280 8kHz Abtastungen (1280 x 125 µs = 160 ms) bzw. der Rahmen aus 80 8kHz Abtastungen (80 x 125 µs= 10 ms) zusammensetzen läßt.

Die Rahmensynchronisationsinformation wird in den Synchronisationskanal gegeben, sie wird ausschließlich für die Synchronisation verwendet.

Die als Hauptstation dienende Basisstation FP1 oder der Digitale Signalprozessor DSP senden eine synchronisierte Multiframe-Folge über den Synchronisationskanal. Die DECT-Controller-Unit DCU leitet die synchronisierte Multiframe-Folge an sämtliche als Unterstationen dienenden Basisstationen FP2...FPN und die Hauptstation FP1 weiter. Die synchronisierte Multiframe-Folge wird im selben 8kHz-Rahmen an alle Basisstationen FP1...FPN gesendet, jedoch mit der zuvor ermittelten und somit bekannten Laufzeitdifferenz dort empfangen.

In jeder Basisstation FP1...FPN dient ein Phasenregelkreis der Synchronisation. Prinzipiell besteht dieser Phasenregelkreis aus einem Flipflop und einem Zähler, wie in Fig. 3 gezeigt. Wird das Flipflop durch das von jedem Fixed Part intern gebildete Signal "FP-Multiframe-sync" gesetzt, fängt der Zähler an zu zählen und wird von dem im Synchronisationskanal empfangenen, von der als Hauptstation genutzten Basisstation FP1 oder dem Digitalen Signalprozessor DSP gebildeten Signal "System-Multiframe-sync", angehalten. Jeder Fixed Part muß nun sein FP-multiframe-sync so legen, daß der gemessene Zeitunterschied zwischen FP-Multiframe-sync und dem System-Multiframe-sync genau der realen Systemverzögerung entspricht, da um diese Zeit verzögert das Signal bei den Fixed Parts eintrifft und die Multiframe-Numbers müssen übereinstimmen. Damit ist das System auch bezüglich der Multiframe-Number synchronisiert. Dieses Verfahren zur Synchronisation ist auch bei der Nutzung der bekannten ISDN-Kanalstruktur, zwei Basiskanäle, ein Hilfskanal, auf ISDN-Schnittstellen anwendbar.

## Patentansprüche

1. Verfahren zur Synchronisation der Luftschnittstellen von zu einem Funknetz gehörenden Basisstationen nach dem DECT-Standard, bei dem die Basisstationen an eine DECT-Controller-Unit fest angeschlossen sind, **dadurch gekennzeichnet, daß** eine der Basisstationen (FP1) als Hauptstation und die weiteren Basisstationen (FP2...FPN) als von ihr abhängige Unterstationen oder ein digitaler Signalprozessor (DSP) als Hauptstation und sämtliche Basisstationen (FP1...FPN) als Unterstationen genutzt werden, ein Signalisierungskanal der als Hauptstation genutzten Basisstation (FP1) oder des digitalen Signalprozessors (DSP) ausschließlich als Synchronisationskanal für die Synchronisation zwischen der DECT-Controller-Unit (DCU) und den Basisstationen (FP1...FPN) sowie unter den Basisstationen (FP1...FPN) selbst dient und von der als Hauptstation genutzten Basisstation (FP1) oder dem digitalen Signalprozessor (DSP) eine Rahmensynchronisationsinformation zur Synchronisierung der Basisstationen (FP1...FPN) über den Synchronisierungskanal gesendet wird.

2. Verfahren nach Anspruch 1, **dadurch gekennzeichnet, dass** für jede Basisstation (FP1...FPN) deren reale Systemverzögerung bestimmt wird und die Basisstationen (FP1...FPN) entsprechend ihrer jeweiligen realen Systemverzögerung synchronisiert werden, wobei die reale Systemverzögerung einer Basisstation (FP1...FPN) aus der Laufzeit eines Signals zwischen der DECT-Controller Unit (DCU) und der Basisstation (FP1...FPN), den restlichen Verzögerungszeiten der DECT-Controller-Unit (DCU) und/oder der Schaltkreise bestimmt wird.

3. Verfahren nach Anspruch 1 oder 2, **dadurch gekennzeichnet, dass** ein Signal in den jeweiligen Basisstationen (FP1...FPN) um eine Zeit verzögert wird, die der Differenz zwischen einer festgelegten maximalen Systemverzögerung und der realen Systemverzögerung entspricht.

4. Verfahren nach einem der vorstehenden Ansprüche, **dadurch gekennzeichnet, daß** die Rahmensynchronisationsinformation von der DECT-Controller-Unit an sämtliche als Unterstationen genutzte Basisstationen (FP1...FPN) und an die als Hauptstation genutzte Basisstation (FP1) geleitet wird.

5. Verfahren nach einem der vorstehenden Ansprüche, **dadurch gekennzeichnet daß** als Rahmensynchronisationsinformation von der als Hauptstation genutzten Basisstation (FP1) oder dem digitalen Signalprozessor (DSP) eine über den Synchronisationskanal gesendete synchronisierte System-Multiframe-Folge (System-Multiframe-Number) dient.

6. Verfahren nach Anspruch 5, **dadurch gekennzeichnet, daß** die synchronisierte System-Multiframe-Folge (System-Multiframe-sync) zeitversetzt an alle Basisstationen (FP1...FPN) gesendet wird.

7. Verfahren nach Anspruch 5 oder 6, **dadurch gekennzeichnet, daß** alle Basisstationen (FP1...FPN) ein internes synchronisiertes Multiframe-Signal (FP-Multiframe-sync) erzeugen und dieses zur Synchronisation mit der synchronisierten System-Multiframe-Folge (System-Multiframe-sync) einem Phasenregelkreis zuführen.

8. Verfahren nach Anspruch 7, **dadurch gekennzeichnet, dass** in dem Phasenregelkreis zwischen dem internen synchronisierten Multiframe-Signal (FP-Multiframe-sync) und der synchronisierten System-Multiframe-Folge (System-Multiframe-sync) ein Zeitunterschied hergestellt wird, der der realen Systemverzögerung der jeweiligen Basisstation (FP1...FPN) entspricht.

## Claims

1. Method for synchronization of the air interfaces on base stations which belong to a radio network according to the DECT standard, in which the base stations are permanently connected to a DECT controller unit, **characterized in that** one of the base stations (FP1) is used as a main station and the further base stations (FP2...FPN) are used as substations which are dependent on it, or a digital signal processor (DSP) is used as the main station and all of the base stations (FP1...FPN) are used as substations, a signalling channel of the base station (FP1) which is used as the main station or of the digital signal processor (DSP) is used exclusively as a synchronization channel for synchronization between the DECT controller unit (DCU) and the base stations (FP1...FPN) as well as between the base stations (FP1...FPN) themselves, and the base station (FP1) which is used as the main station, or the digital signal processor (DSP), transmits frame synchronization information for synchronization of the base stations (FP1...FPN) via the synchronization channel.

2. Method according to Claim 1, **characterized in that** the real system delay is determined for each base station (FP1...FPN), and the base stations (FP1...FPN) are synchronized in accordance with their respective real system delay, with the real system delay of a base station (FP1...FPN) being determined from the delay time of a signal between the DECT controller unit (DCU) and the base station (FP1...FPN), the remaining delay times of the DECT controller unit (DCU) and/or of the circuits.

3. Method according to Claim 1 or 2, **characterized in that** a signal is delayed in the respective base stations (FP1...FFN) by a time which corresponds to the difference between a fixed maximum system delay and the real system delay.

4. Method according to one of the preceding claims, **characterized in that** the frame synchronization information is passed from the DECT controller unit to all of the base stations (FP1...FPN) which are used as substations, and to the base station (FP1) which is used as the main station.

5. Method according to one of the preceding claims, **characterized in that** a system multiframe sequence (system multiframe number) which is transmitted via the synchronization channel is used as frame synchronization information by the base station (FP1) which is used as the main station, or by the digital signal processor (DSP).

6. Method according to Claim 5, **characterized in that** the synchronized system multiframe sequence (system multiframe sync) is transmitted with a time offset to all the base stations (FP1...FPN).

7. Method according to Claim 5 or 6, **characterized in that** all the base stations (FP1...FPN) produce an internal synchronized multiframe signal (FP multiframe sync) and supply this for synchronization with the synchronized system multiframe sequence (system multiframe sync) to a phase locked loop.

8. Method according to Claim 7, **characterized in that** a time difference is produced in the phase locked loop between the internal synchronized multiframe signal (FP multiframe sync) and the synchronized system multiframe sequence (system multiframe sync), with this time difference corresponding to the real system delay of the respective base station (FP1...FPN).

## Revendications

1. Procédé de synchronisation des interfaces air de stations de base appartenant à un réseau radio selon le standard DECT, dans lequel les stations de base sont connectées à une unité de contrôle DECT, **caractérisé en ce qu'**une des stations de base (FP1) est utilisée comme station principale et les autres stations de base (FP2...FPN) comme sous-stations dépendantes de la station principale ou un processeur analogique numérique (DSP) est utilisé comme station principale et toutes les stations de base (FP1...FPN) comme sous-stations, un canal de signalisation de la station de base (FP1) utilisée comme station principale ou du processeur, analogique numérique (DSP) sert lui-même exclusivement de canal de synchronisation pour la synchronisation entre l'unité de contrôle DECT (DCU) et les stations de base (FP1...FPN) ainsi que les sous stations de base (FP1...FPN) et des informations de synchronisation de trame sont envoyées via le canal de synchronisation par la station de base (FP1) utilisée comme station principale ou par le processeur analogique numérique (DSP) pour la synchronisation des stations de base (FP1...FPN).

2. Procédé selon la revendication 1, **caractérisé en ce que** pour chaque station de base (FP1...FPN), le retard système réel est déterminé et les stations de base (FP1...FPN) sont synchronisées en fonction du retard système réel correspondant, en sorte que le retard système réel d'une station de base (FP1...FPN) est déterminé à partir du temps de parcours d'un signal entre l'unité de contrôle DECT (DCU) et la station de base (FP1...FPN), des temps de retard restants de l'unité de contrôle DECT (DCU) et/ou du circuit de commutation.

3. Procédé selon la revendication 1 ou 2, **caractérisé en ce qu'**un signal est retardé d'un certain temps dans les stations de base respectives (FP1...FPN), lequel temps correspond à la différence entre un retard système maximum déterminé et le retard système réel.

4. Procédé selon l'une quelconque des revendications précédentes, **caractérisé en ce que** les informations de synchronisation de trame de l'unité de contrôle DECT sont envoyées à toutes les stations de base utilisées comme sous-stations (FP1...FPN) et à la station de base utilisée comme station principale (FP 1).

5. Procédé selon l'une quelconque des revendications précédentes, **caractérisé en ce qu'**une séquence multitrame système (numéro multitrame système) synchronisée envoyée par le canal de synchronisation est utilisée comme information de synchronisation de trame par la station de base (FP1) utilisée comme station principale ou par le processeur analogique numérique (DSP).

6. Procédé selon la revendication 5, **caractérisé en ce que** la séquence multitrame système (sync multitrame système) est envoyée en différé à toutes les stations de base (FP1...FPN).

7. Procédé selon la revendication 5 ou 6, **caractérisé en ce que** toutes les stations de base (FP1...FPN) génèrent un signal multitrame synchronisé interne (sync multitrame FP) et **en ce que** ce signal alimente un circuit de régulation de phase pour synchronisation avec la séquence multitrame système synchronisée (sync multitrame système).

8. Procédé selon la revendication 7, **caractérisé en ce qu'**un écart de temps est généré dans le circuit de régulation de phase entre le signal multitrame synchronisé interne (sync multitrame FP) et la séquence multitrame système synchronisée (sync multitrame système), écart qui correspond au retard système réel de la station de base correspondante (FP1...FPN).
